# EUROPÄISCHE PATENTSCHRIFT

(11) **EP 2 271 718 B1**
(45) Veröffentlichungstag und Bekanntmachung des Hinweises auf die Patenterteilung: **08.02.2012**
(21) Anmeldenummer: 09737848.3
(22) Anmeldetag: 23.04.2009
(51) Int. Cl.: C09D 11/00

(54) **TINTENKONZENTRAT ZUR HERSTELLUNG VON INKJET-TINTEN**
INK CONCENTRATE FOR THE PRODUCTION OF INKJET INKS
CONCENTRÉ D'ENCRE POUR LA FABRICATION D'ENCRES POUR L'IMPRESSION PAR JET D'ENCRE

(30) Priorität: 30.04.2008 DE 102008021824
(43) Veröffentlichungstag der Anmeldung: 12.01.2011
(73) Patentinhaber: Pelikan Hardcopy Production AG, 8132 Egg (CH)
(72) Erfinder: DIETRICH, Jan, CH-8132 Egg (CH)
(74) Vertreter: Hagemann, Heinrich
(86) Internationale Anmeldenummer: PCT/EP2009/002970
(87) Internationale Veröffentlichungsnummer: WO 2009/132804

(56) Entgegenhaltungen:
- WO-A-01/62859
- DE-U1-202006 005 840
- US-A- 4 533 920

## Beschreibung

Es ist häufig erforderlich, InkJet-Tinten an einem entfernten Ort herzustellen und dann über mehr oder weniger lange Wege zu dem Ort transportiert werden, an dem sie beispielsweise in Kartuschen abgefüllt und für die InkJet-Anwendung bereitgestellt werden. Die fertigen InkJet-Tinten werden demzufolge häufig auf Vorrat zubereitet, gelagert und zu gegebener Zeit zum Versendungsort (Filialen oder Kunden) transportiert.

Die Zubereitung der Konzentrate wurde bis jetzt im Bereich der Rohstoffkomponente (Farbstoffe, Bindemittel, Additive, Feuchthaltemittel, Hilfsstoffe) praktiziert. Die Herstellung von Tintenkonzentraten, die mit einer merklichen Menge Wasser verdünnt zu der fertigen InkJet-Tinte führen, stieß bisher auf Probleme der Lagerstabilität, zu unerwünschten Ausfällungen und auch auf "Berührungsängste", so dass aus pragmatischen Gründen das herkömmliche "sichere" Verfahren weiterhin zur Anwendung gekommen ist, wobei davon abgesehen wurde, Tintenkonzentrate herzustellen, die durch Verdünnen mit Wasser in eine gebrauchsfertige InkJet-Tinte überführt werden.

Das übliche Verfahren, demzufolge unter Ausschluss der Tintenkonzentrate, richtete sich bisher darauf, in den Unternehmen, die sich mit der Tintenherstellung befassen, InkJet-Tinten z.B. wie folgt herzustellen: a) direkt in einem Prozess zubereiten (Zugabe der einzelnen flüssigen oder festen Komponenten in der Lieferform hintereinander), b) aus den einzelnen Hilfslösungen der flüssigen oder festen Komponenten und aus den übrigen Komponenten oder c) aus der Kombination von a) und b). Diese Art der Tintenzubereitung ist technisch und zeitlich aufwendig und meist nur Fachbetrieben von Unternehmen möglich. Die Rohstoffbeschaffung, die Auflösung der einzelnen festen Tintenkomponenten, die Zubereitung der Hilfslösungen aus den festen und flüssigen Komponenten, die Zugabe der Rezepturbestandteile in vorgeschriebener Reihenfolge ist mit einer beachtlichen Logistik und Lagerkapazität und mit den menschlichen Ressourcen verbunden.

Auch die nachfolgend geschilderten Druckschriften geben keinerlei hinlängliche Hinweise, wie ein Konzentrat hergestellt werden könnte, das die vorstehend bezeichneten Anforderungen erfüllt:

Die DE 20 2006 005 840 U1 betrifft kein Tintenkonzentrat, sondern eine unmittelbar gebrauchsfertige wässrige InkJet-Tinte. Diese enthält neben einem Feuchthaltemittel ein bis zu 7 Gew.-% hochsiedendes Lösungsmittel eines Siedepunktes von mehr als 205 °C und/oder bis zu 10 Gew.-% eines niedrigsiedenden Lösungsmittels eines Siedepunktes von weniger als 205 °C. Es ist möglich, dass das hochsiedende Lösungsmittel fehlt. Das hochsiedende Lösungsmittel muss aber in dem nachfolgend beschriebenen Tintenkonzentrat gemäß der Erfindung in einer Menge von mehr als 15 Gew.-% vorliegen. Auch die DE 601 01 560 T2 betrifft kein Tintenkonzentrat. Die bekannte Tinte enthält zwingend ein pH-Stellmittel, um deren pH-Wert auf 4 bis 8 einzustellen. Das Tintenkonzentrat gemäß vorliegender Erfindung weist einen pH-Wert von mehr als 8 auf, es sei denn, der Gehalt an Feuchthaltemittel wird angehoben. Hierauf wird nachfolgend noch eingegangen.

In Anbetracht des vorstehend geschilderten Standes der Technik lag der Erfindung die Aufgabe zugrunde, ein Tintenkonzentrat zur Herstellung von InkJet-Tinten vorzuschlagen, das keine speziellen Anforderungen an das herstellende Unternehmen stellt, sondern einfach, technisch unkompliziert, schnell und flexibel vor Ort, gegebenenfalls in Kleinbetrieben, zubereitet werden kann und lagerstabil ist. Das Tintenkonzentrat soll schnell, sicher und technisch einfach in die finale Tintenzubereitung für den InkJet-Druck überführbar sein, wobei je nach Anwendungsfall der geeignete Verdünnungsgrad problemlos einstellbar sein soll. Demzufolge sollte in jedem Fall eine funktionsfähige Tinte herstellbar sein.

Die obige Aufgabe wird durch ein Tintenkonzentrat zur Herstellung von InkJet-Tinten, das dadurch gekennzeichnet ist, dass es einen pH-Wert von mehr als 8, insbesondere mehr als 8,5, aufweist und enthält
a) 5 bis 30 Gew.-% Farbstoffe,
b) 15 bis 50 Gew.-% hochsiedende(s) Lösungsmittel eines Siedepunkts von mehr als 200 °C bis 260 °C,
c) 0,5 bis 20 Gew.-% tiefsiedende(s) Lösungsmittel eines Siedepunkts von 130 °C bis weniger als 200 °C,
d) 3 bis 35 Gew.-%, insbesondere mehr als 8 und bis zu 35 Gew.-% Feuchthaltemittel,
e) mehr als 0,1 Gew.-%, insbesondere 0,1 bis 7 Gew.-% Tensid,
f) gegebenenfalls mehr als 0,01, insbesondere 0,01 bis 5 Gew.-% pH-Stellmittel zur Einstellung eines pH-Wertes von mehr als 7,
g) gegebenenfalls mehr als 0,05 Gew.-%, insbesondere 0,05 bis 0,7 Gew.-% Komplexbildner,
h) gegebenenfalls mehr als 0,01 Gew.-%, insbesondere 0,01 bis 0,7 Gew.-% Biozid und
i) Rest Wasser.

Das erfindungsgemäße Tintenkonzentrat wird spätestens dann, wenn es in die gebrauchsfertige Tinte überführt wird, in dem jeweils gewünschten Ausmaße mit Wasser verdünnt. Hieraus resultiert ein niedrigeres spezifisches Gewicht und eine niedrigere Viskosität. Als bevorzugte Regel könnte man angeben, dass auf ein Gewichtsteil Tintenkonzentrat 4 bis 0,2 Gewichtsteile, insbesondere 3 bis 0,3 Gewichtsteile Wasser entfallen.

Es versteht sich von selbst, dass in dem erfindungsgemäßen Tintenkonzentrat Farbstoffe enthalten sind, die für die Endverwendung des verdünnten Tintenkonzentrats in InkJet-Druckern geeignet sind. Als Beispiel können mit Colour-Index angegeben werden: R.R.195 (Reactive Red 195), D.Y.132 (Direct Yellow 132), R.R.23 (Reactive Red 23), D.B.199 (Direct Blue 199), R.BI.31 (Reactive Black 31), R.Y.37 (Reactive Yellow 37), A.Y.23 (Acid Yellow 23), A.R.52 (Acid Red 52), R.R.180 (Reactive Red 180), A.B.9 (Acid Blue 9), D.Y.96 (Direct Yellow 96). Das erfindungsgemäße Tintenkonzentrat enthält die geeigneten Farbstoffe in einer Menge von mehr als 5 Gew.-%, insbesondere mehr als 6 Gew.-%. Der Bereich von 5 bis 15 Gew.-% ist bevorzugt. In dem Bereich von 7 bis 15 Gew.-% erweist sich die Erfindung als besonders vorteilhaft.

Daneben enthält das erfindungsgemäße Tintenkonzentrat ein hochsiedendes und ein tiefsiedendes Lösungsmittel. Zur Abgrenzung dieser beiden Lösungsmittel soll deren Siedepunkt gelten.

Das hochsiedende Lösungsmittel hat einen Siedepunkt von mindestens 200 °C, insbesondere von mindestens 205 °C, wobei der Rahmen von mehr als 200 °C bis 260 °C einzuhalten ist. Ganz besonders bevorzugt ist es, wenn dessen Siedepunkt zwischen 205 °C und 250 °C liegt. Als Beispiele hochsiedender Lösungsmittel können angegeben werden: 1,5-Pentandiol (240 °C bis 242 °C), 1,2-Pentandiol (208 °C bis 210 °C), 2-Pyrrolidon (245 °C), Diethylenglykol (246 °C), Butyldiglykol (230 °C), 1,2-Hexandiol (223 °C bis 224 °C) und 2,5-Hexandiol (216 °C). Diese Lösungsmittel können im Einzelfall eine weitergehende Funktion erfüllen, wie beispielsweise 1,2-Hexandiol und 2,5-Hexandiol, die auch als Netzmittel wirken können. Das hochsiedende Lösungsmittel liegt in dem erfindungsgemäßen Tintenkonzentrat in einer Menge von 15 bis 50 Gew.-%, insbesondere von 15 bis 40 Gew.-% vor, wobei der Bereich von 20 bis 40 Gew.-% besonders bevorzugt ist.

Das tiefsiedende Lösungsmittel eines Siedepunkts von 130 °C bis weniger als 200 °C, insbesondere etwa 145 bis 195 °C, liegt in dem efindungsgemäßen Tintenkonzentrat in einer Menge von 0,5 bis 20 Gew.-%, insbesondere in einer Menge von 2 bis 15 Gew.-% vor, wobei der Bereich von 3 bis 10 Gew.-% besonders bevorzugt ist, vor. Ihr Siedepunkt liegt bevorzugt in dem Bereich von 145 °C bis 198 °C. Bevorzugte Beispiele des tiefsiedenden Lösungsmittels sind: Butylglykol (171 °C), Ethylenglykol (198 °C), PropylenGlykol-n-Propylether (Handelsbezeichnung: Dowanol PnP) (149 °C) und Propylen-Glykol-n-Butylether (Dowanol PnB) (171 °C). Die beiden zuletzt bezeichneten tiefsiedenden Lösungsmittel können auch die Funktion eines Netzmittels erfüllen. Diejenigen niedrigsiedenden Lösungsmittel, die gleichzeitig die Netzmittelfunktion aufweisen, werden vorzugsweise innerhalb des erfindungsgemäß definierten Rahmens in geringerer Menge eingesetzt, so insbesondere in einer Menge von 0,5 bis 2 Gew.-%.

Gleichermaßen efindungsrelevant ist die Einbeziehung von Tensiden in einer Menge von mehr als 0,1 Gew.-%, insbesondere mehr als 0,5 Gew.-%, insbesondere in einer Menge von 0,1 bis 7 Gew.-%, wobei der Bereich von 0,1 bis 4 Gew.-% bevorzugt ist. Ganz besonders bevorzugt ist der Bereich von 1 bis 2 Gew.-%. Bei den Tensiden unterliegt der Fachmann keinen wesentlichen Einschränkungen. Geeignete Tenside lassen sich fachmännisch ermitteln und sind auch im Stand der Technik umfänglich bezeichnet. Hierzu zählen insbesondere die bekannten Surfynol-Produkte (Surfynol 440, Surfynol 465, Surfynol 104PA) und Silwet-Copolymer L7607, bei denen es sich chemisch um Acetylenglykole bzw. Polyalkylenoxidcopolymersiloxane handelt. Darüber hinaus können für diesen Zweck besonders geeignete Fluor-Tenside zusätzlich herangezogen werden, die von der Firma DuPont unter den Bezeichnungen *"Zonyl FSN"* oder *"Zonyl FSO"* vertrieben werden.

Ein zwingender Bestandteil des erfindungsgemäßen Tintenkonzentrats ist ein Feuchthaltemittel, wobei das Feuchthaltemittel in einer Menge von mindestens 3, vorzugsweise von mehr als 6 und insbesondere von mehr als 8 Gew.-% vorliegt. Als weitergehende bevorzugte Untergrenze könnte angegeben werden 8,5 Gew.-%. Als vorteilhafter Höchstwert ist eine Menge von 35 Gew.-%, insbesondere von 27 Gew.-% anzugeben. Als bevorzugte Rahmenbedingung gilt eine Menge von mehr als 8, insbesondere mehr als 8,5 und bis zu 27 Gew.-%. In Einzelfällen hat es sich erwiesen, dass der Bereich von 5 bis 20 Gew.-% zu besonders vorteilhaften Ergebnissen führt. Zu den besonders bevorzugten Feuchthaltemitteln zählen Harnstoff sowie dessen Derivate, wie Dimethylharnstoff, und Glycerin (1, 2, 3-Propantriol).

Die obigen Darstellungen machen deutlich, was für die erfindungsgemäßen Tintenkonzentrate qualitativ und quantitativ erforderlich ist, um die gestellte Aufgabe zu lösen. Es wurden demzufolge die zwingenden Merkmale angesprochen. Andererseits werden, um die Aufgabe optimaler zu lösen, fakultative Bestandteile einbezogen. Der pH-Wert des Tintenkonzentrats soll über 8 liegen. Dabei ist es bevorzugt, wenn der pH-Wert mehr als 8,5 für das Tintenkonzentrat die zweckmäßige Untergrenze darstellt. Als vorteilhafter Höchstwert könnte ein pH-Wert von 14, insbesondere 13 und ganz besonders bevorzugt 12 angegeben werden. Demzufolge ergibt sich als bevorzugte Rahmenbedingungen ein pH-Wert von 8,5 bis 13, insbesondere 9 bis 13. In der Regel stellt sich durch die erfindungsgemäß gewählten qualitativen und quantitativen Rahmenbedingungen an einzubeziehenden Bestandteilen ein pH-Wert ein, der zur Lösung der Aufgabe beiträgt.

In Einzelfällen ist es bevorzugt, ein pH-Stellmittel einzubeziehen, um die angegebenen pH-Werte in der Tintenkonzentrat einzustellen und zu halten. Die Menge an fakultativ hinzuzugebendem Stellmittel beträgt vorzugsweise mehr als 0,01, insbesondere 0,01 bis 5 Gew.-%. Im Allgemeinen ist es bevorzugt, dass das pH-Stellmittel in einer Menge von 1 bis 3 Gew.-% vorliegt und/oder das pH-Stellmittel zur Einstellung eines pH-Wertes von 8 bis 10 dient. Zu den besonders bevorzugten pH-Stellmitteln zählen primäre, sekundäre und/oder tertiäre Amine, insbesondere Alkanolamine. Unter den Alkanolaminen sind das Ethanolamin und das Triethanolamin bevorzugt..

In Einzelfällen kann es vorteilhaft sein, einen Komplexbildner in einer Menge von mindestens 0,05 Gew.-%, insbesondere 0,05 bis 0,7 Gew.-% einzubeziehen, insbesondere in einer Menge von 0,05 bis 0,4 Gew.-%, wobei die Menge von 0,10 bis 0,20 besonders bevorzugt ist. Als Komplexbildner kommt vorzugsweise das Tetranatriumsalz vom EDTA (Tetranatriumsalz der Ethylendiamintetraessigsäure) in Frage.

Gleichermaßen fakultativ ist die Einbeziehung von mindestens 0,01 Gew.-% eines Biozids, insbesondere in einer Menge von 0,01 bis 0,7 Gew.-%. Weitergehend bevorzugt ist der Bereich von 0,01 bis 0,5 Gew.-%, insbesondere von 0,15 bis 0,3 Gew.-%. Mit dem Biozid wird die Lagerstabilität des Tintenkonzentrats verbessert. Als vorteilhafte Biozide können bezeichnet werden: eine wässrige Lösung von 1,2-Benzisothiazolin-3-on in Dipropylenglykol (PROXEL GXL) sowie eine Mischung aus 2-Octyl-2H-isodiasol-3-on und Benzylhemiformal (Preventol D2 plus) sowie eine Mischung aus Benzylalkoholmono(poly)-hemiformal und Formaldehyd.

Dem Fachmann ist es ohne Weiteres möglich, im Einzelfall geeignete weitere Additive fakultativ mit einzubeziehen, wozu beispielsweise zählen: diverse Netzmittel, die die Penetration der Tinte in das Papier steuern können. Diese Funktion erfüllen z.B. diverse Alkohole, wie Isopropyl- und Propylalkohol, aber auch die bereits vorher erwähnten tiefsiedenden Lösungsmittel der Handelsbezeichnung Dowanol PnP und Dowanol PnB.

Als Richtlinie kann gelten, dass das erfindungsgemäße Tintenkonzentrat 25 bis 65 Gew.-%, insbesondere 30 bis 55 Gew.- Wasser, vorzugsweise in demineralisierter Form, enthält. Weitergehend optimiert wird dieses dadurch, dass im Rahmen der obigen quantitativen und qualitativen Angaben die Dichte, Viskosität und die Oberflächenspannung optimal eingestellt werden. Dabei gilt es als bevorzugt, wenn die Dichte des Tintenkonzentrats 1,05 bis 1,25 g/cm³, insbesondere 1,08 bis 1,18 g/cm³ beträgt. Seine Brookfield-Viskosität (gemessen bei 25 °C) liegt vorzugsweise zwischen 2 und 30 mPa.s, insbesondere zwischen 3 und 25 mPa.s, wobei der Bereich von 5 bis 15 mPa.s besonders bevorzugt ist. Die Oberflächenspannung, gemessen mit der Ringmethode (nach Krüss) (bei 25 °C), beträgt vorzugsweise 25 bis 50 mN/m, insbesondere 30 bis 45 mN/m. Der Bereich von 33 bis 40 mN/m gilt als besonders bevorzugt.

Zwar werden im Rahmen der Erfindung gewichtsprozentuale Angaben gemacht. Allerdings könnte der Fachmann auch von Gewichtsteilen ausgehen, so von 4 bis 30 Gewichtsteilen Farbstoffen, die mit 15 bis 50 Gewichtsteilen hochsiedendem Lösungsmittel, 0,5 bis 20 Gewichtsteilen tiefsiedendem Lösungsmittel, 3 bis 35 Gewichtsteilen Feuchthaltemittel und 0,1 bis 4 Gewichtsteilen Tensid versehen werden, gegebenenfalls unter gleichen entsprechenden Gewichtsteilangaben zu den weiteren fakultativen Komponenten. Die vorstehend angegebenen gewichtsprozentualen Angaben, insbesondere die als bevorzugt herausgestellten, lassen sich in diese Angaben auf der Basis von Gewichtsteilen entsprechend umrechnen.

In Einzelfällen ist es vorteilhaft, dem erfindungsgemäßen Tintenkonzentrat im Hinblick auf die spätere Verwendung Verflüchtigungshilfsmittel zuzugeben, bei denen es sich um leicht verdampfbare Flüssigkeiten, insbesondere um niedere Alkohole handelt, insbesondere solche mit 1 bis 4 Kohlenstoffatomen. Besonders bevorzugte Verflüchtigungshilfsmittel sind Methanol, Ethanol, Propanol, Isopropanol, Butanol und Pentanol, wobei Isopropanol besonders bevorzugt ist. Die Verflüchtigungshilfsmittel führen bei der späteren Verwendung in der gebrauchsfertigen Inkjet-Tinte beim Bedrucken von Papier zu einem schnelleren Trocknen. Zudem wird die Schmierfestigkeit verbessert. Die Einstellung einer geeigneten Menge ist fachmännisch problemlos möglich.

Anhand der vorstehend angegebenen quantitativen und qualitativen zwingenden und fakultativen Angaben zum Tintenkonzentrat gemäß der Erfindung ist es dem Fachmann problemlos möglich, das Erfindungsziel zu erreichen, indem das Tintenkonzentrat in geeigneter Weise mit Wasser verdünnt wird, vorzugsweise in demineralisierter Form. Dies führt zu den besonderen Vorteilen der Erfindung: Das erfindungsgemäße Tintenkonzentrat ist stabil und kann monatelang gelagert und dann transportiert werden. Dabei wird ein Umschlagvolumen von bis zu 70% eingespart. Dies korreliert mit der Lagerfläche und mit den Lager- und Transportkosten. Bei den meisten Tintenkonzentraten gemäß der Erfindung führt dies zu einer Ersparnis von 45 bis 55%. Die für den Endverbrauch vorgesehene (verdünnte) InkJet-Tinte kann je nach Bedarf und flexibel in einem Unternehmen oder auch in anderen Unternehmen durch einfaches Zumischen von Wasser zu dem Tintenkonzentrat zubereitet werden. Die Lager- und Transportkosten sowie die gesamte ökologische Bilanz der Unternehmen, die sich mit der Herstellung, dem Verkauf und der Verwendung von Tinten befassen, wird deutlich verbessert. Das erfindungsgemäße Tintenkonzentrat lässt sich durch einfaches Mischen der angegebenen Bestandteile (z.B. mit einem Propeller-Rührer in einem Kessel) herstellen. Auch dessen Überführung in die fertige und funktionsfähige InkJet-Tinte ist einfach, so ebenfalls mit einem Propeller-Rührer in einem Kessel möglich. Demzufolge sind diesbezüglich weitere Hinweise nicht erforderlich. Schließlich hat es sich gezeigt, dass die anhand des erfindungsgemäßen Tintenkonzentrats durch Verdünnen mit Wasser hergestellten, gebrauchsfertigen Inkjet-Tinten die wünschenswerte Viskosität haben und zu einer stabilen InkJet-Tinte führen. Diese zeigen vorteilhaften Fluss aus refillten Kartuschen bzw. Patronen und zeigen keine unerwünschte Streifenbildung.

Mit dem Tintenkonzentrat gemäß der Erfindung werden weitergehende Proble gelöst. So haben die Erfinder festgestellt, dass dann, wenn ein Konzentrat mit einem zu hohen Anteil an Farbstoffen zubereitet wird, dieses im Laufe der Zeit instabil wird und Bestandteile der Tinte sedimentieren. Gleiches kann auftreten, wenn der pH-Wert zu tief eingestellt wird, beispielsweise zu wenig Triethanolamin herangezogen wird. Wird ein Konzentrat mit einem zu niedrigen Anteil an Farbstoffen zubereitet, dann geht der Vorteil einer Konzentratzubereitung verloren. Schließlich hat es sich gezeigt, dass geeignete quantitative Rahmenbedingungen der Tintenkomponenten im Tintenkonzentrat vorliegen müssen, damit durch einfaches Verdünnen mit Wasser eine funktionsfähige InkJet-Tinte entsteht.

Nachfolgend finden sich einige Beispiele erfindungsgemäßer Tintenkonzentrate, die deren Erläuterung dienen sollen.

### Beispiele 1 bis 4:

Die nachfolgend beschriebenen vier Rezepturen zu einem Cyan-, Magenta-, Gelb-, Schwarz-Konzentrat liegen im Rahmen der vorliegenden Erfindung und lassen sich problemlos mit der erforderlichen Wassermenge zu einer funktionsfähigen InkJet-Tinte verdünnen . Diese Ausgangskomponenten werden in einen Kessel gegeben und dort mit einem Propeller-Rührer vermischt.

| | CYAN-Konzentrat | MAGENTA-Konzentrat | GELB-Konzentrat | SCHWARZ-Konzentrat |
|---|---|---|---|---|
| | Beispiel 1: Cyan-Konzentrat für Bubble Jet Drucker | Beispiel 2; Magenta-Konzentrat für Bubble Jet Drucker | Beispiel 3: Konzentrat-Gelb für Piezo-Drucker | Beispiel 4: Konzentrat-Schwarz für Bubble-Jet Drucker |
| Wasser (demineralisiert) | 51,00 | 35,78 | 36,00 | 46,40 |
| Biocid: Preventol D2 Plus | 0,17 | 0,23 | 0,20 | 0,08 |
| Hochsiedende Lösungsmittel 1: 1,5 Pentandiol | 17,15 | 11,52 | - | 19,88 |
| Hochsiedende Lösungsmittel 2: 2-Pyrrolidon | - | 11,52 | - | - |
| Hochsiedende Lösungsmittel 3: Diethylenglykol | - | - | 30,00 | - |
| Tiefsiedende Lösungsmittel: Butyldiglykol | 5,17 | 6,86 | 9,00 | 3,31 |
| Feuchthaltemittel 1: Glycerin | 10,29 - | 18,43 | 16,00 | 4,97 |
| Feuchthaltemittel 2: Harnstoff | 5,15 | 6,91 | - | 9,94 |
| pH Stellmittel: Triethanolamin | 0,86 | - | 1,60 | 2,49 |
| Komplexbildner: EDTA Tetranatriumsalz | 0,09 | 0,12 | 0,10 | 0,08 |
| Tensid 1: Surfynol 465 | 0,86 | 1,15 | 1,10 | 0,83 |
| Tensid 2: Surfynol 440 | 0,26 | 0,35 | 0,30 | 0,17 |
| D.B.199 | 9,00 | - | - | - |
| A.R.52 | - | 0,23 | - | - |
| A.Y.23 | - | - | - | 0,25 |
| D.Y.86 | - | - | 3,00 | - |
| D.Y.132 | - | - | 2,70 | - |
| R.BI.31 | - | - | - | 11,60 |
| R.R.195 | - | 6,90 | - | - |
| Konzentrat - Total (g) | 100,00 | 100,00 | 100,00 | 100,00 |
| Oberflächenspannung (mN/m) Ring-Methode / (Fa. Krüss, DE) (25 °C) | 34,5 | 35,8 | 35,9 | 36,0 |
| Viskosität (mPa.s), Brookfield (25 °C) | 5,65 | 10,77 | 14,53 | 9,61 |
| Leitfähigkeit (µS/cm) | 2'460 | 2'110 | 810 | 4'800 |
| Dichte (g/cm³) | 1,0840 | 1,1200 | 1,1075 | 1,1050 |
| pH-Wert | 9,10 | 9,81 | 9,09 | 8,70 |
| Wasser zum Verdünnen (g) | 71,53 | 76,68 | 100,00 | 65,70 |

### Vergleichsbeispiele 1 bis 3:

Um die kritische Bedeutung der efindungsgemäßen Rahmenbedingungen nachzuweisen, wurden die Beispiele 2, 3 und 4 erfindungsgemäß wie folgt geändert, wobei diese Modifizierungen nicht zu einem funktionsfähigen Tintenkonzentrat führten.

Es wurde in der Rezeptur nach Beispiel 2 für 6,91 g Farbstoff R.R.195 eine Menge von 35 g gewählt. Es entstand kein funktionsfähiges Konzentrat. Entsprechendes gilt für das Beispiel 4, wenn in dem Tintenkonzentrat kein hochsiedendes Lösungsmittel enthalten war. Wurde das Beispiel 3 ohne Tensid eingesetzt und wurden 10 Gew.-% Diethylenglykol herangezogen, dann war die daraus gewonnene InkJet- Tinte nicht zu gebrauchen.

## Patentansprüche

1. Tintenkonzentrat zur Herstellung von InkJet-Tinten, wobei dieses einen pH-Wert von mehr als 8, insbesondere mehr als 8,5, aufweist und enthält
a) 5 bis 30 Gew.-% Farbstoffe,
b) 15 bis 50 Gew.-% hochsiedende(s) Lösungsmittel eines Siedepunkts von mehr als 200 °C bis 260 °C,
c) 0,5 bis 20 Gew.-% tiefsiedende(s) Lösungsmittel eines Siedepunkts von 130 °C bis weniger als 200 °C,
d) 3 bis 35 Gew.-%, insbesondere mehr als 8 und bis zu 35 Gew.-% Feuchthaltemittel,
e) mehr als 0,1 Gew.-%, insbesondere 0,1 bis 7 Gew.-% Tensid,
f) gegebenenfalls mehr als 0,01, insbesondere 0,01 bis 5 Gew.-% pH-Stellmittel zur Einstellung eines pH-Wertes von mehr als 8,
g) gegebenenfalls mehr als 0,05 Gew.-%, insbesondere 0,05 bis 0,7 Gew.-% Komplexbildner,
h) gegebenenfalls mehr als 0,01 Gew.-%, insbesondere 0,01 bis 0,7 Gew.-%, Biozid und
i) Rest Wasser.

2. Tintenkonzentrat nach Anspruch 1, **dadurch gekennzeichnet, dass** es 5 bis 20 Gew.-% Feuchthaltemittel enthält.

3. Tintenkonzentrat nach Anspruch 1 oder 2, **dadurch gekennzeichnet, dass** dessen pH-Wert zwischen 8 und 12, insbesondere zwischen 8 und 10 liegt.

4. Tintenkonzentrat nach einem der Ansprüche 1 bis 3, **dadurch gekennzeichnet, dass** dessen pH-Wert weniger als 14, insbesondere weniger als 13 beträgt.

5. Tintenkonzentrat nach einem der Ansprüche 1 bis 4, **dadurch gekennzeichnet, dass** es 5 bis 15 Gew.-% Farbstoff enthält.

6. Tintenkonzentrat nach mindestens einem der vorhergehenden Ansprüche, **dadurch gekennzeichnet, dass** es das hochsiedende Lösungsmittel in einer Menge von 15 bis 40 Gew.-%, insbesondere 15 bis 30 Gew.-% und/oder eines Siedepunkts von 205 bis 250 °C enthält.

7. Tintenkonzentrat nach mindestens einem der vorhergehenden Ansprüche, **dadurch gekennzeichnet, dass** es das niedrigsiedende Lösungsmittel in einer Menge von 2 bis 15 Gew.-%, insbesondere 3 bis 10 Gew.-% und/oder eines Siedepunkts von 145 °C bis 198 °C enthält.

8. Tintenkonzentrat nach mindestens einem der vorhergehenden Ansprüche, **dadurch gekennzeichnet, dass** es zur Einstellung des gewünschten pH-Bereichs ein pH-Stellmittel in einer Menge von 1 bis 3 Gew.-% enthält.

9. Tintenkonzentrat nach mindestens einem der vorhergehenden Ansprüche, **dadurch gekennzeichnet, dass** es 1 bis 2 Gew.-% Tensid enthält.

10. Tintenkonzentrat nach mindestens einem der vorhergehenden Ansprüche, **dadurch gekennzeichnet, dass** es 0,10 bis 0,20 Gew.-% Komplexbildner enthält.

11. Tintenkonzentrat nach mindestens einem der vorhergehenden Ansprüche, **dadurch gekennzeichnet, dass** es 0,15 bis 0,30 Gew.-% Biozid enthält.

12. Tintenkonzentrat nach mindestens einem der vorhergehenden Ansprüche, **dadurch gekennzeichnet, dass** es 25 bis 65 Gew.-%, insbesondere 30 bis 55 Gew.-% Wasser, vorzugsweise in demineralisierter Form, enthält.

13. Tintenkonzentrat nach mindestens einem der vorhergehenden Ansprüche, **dadurch gekennzeichnet, dass** dessen Brookfield-Viskosität 2 bis 30 mPa.s, insbesondere 3 bis 25 mPa.s (gemessen bei 25 °C) beträgt.

14. Tintenkonzentrat nach Anspruch 13, **dadurch gekennzeichnet, dass** dessen Brookfield-Viskosität 5 bis 15 mPa.s beträgt.

15. Tintenkonzentrat nach mindestens einem der vorhergehenden Ansprüche, **dadurch gekennzeichnet, dass** dessen Oberflächenspannung, gemessen nach der Ring-Methode (bei 25°C), 25 bis 50 mN/m, insbesondere 30 bis 45 mN/m beträgt.

16. Tintenkonzentration nach Anspruch 15, **dadurch gekennzeichnet, dass** dessen Oberflächenspannung 33 bis 40 mN/m beträgt.

## Claims

1. An ink concentrate for producing inkjet inks, wherein said ink concentrate has a pH of more than 8, especially more than 8.5, and contains
a) 5 to 30% by weight dyes,
b) 15 to 50% by weight of high-boiling solvent(s) with a boiling point of more than 200°C to 260°C,
c) 0.5 to 20% by weight low-boiling solvent(s) with a boiling point of 130°C to less than 200°C,
d) 3 to 35 % by weight, especially more than 8 and up to 35% by weight humectant,
e) more than 0.1% by weight, especially 0.1 to 7% by weight surfactant,
f) optionally more than 0.01, especially 0.01 to 5% by weight pH adjusting agent to adjust a pH of more than 8,
g) optionally more than 0.05% by weight, especially 0.05 to 0.7% by weight complexing agent,
h) optionally more than 0.01% by weight, especially 0.01 to 0.7% by weight biocide and
i) remainder water.

2. An ink concentrate according to claim 1, **characterised in that** it contains 5 to 20% by weight humectant.

3. An ink concentrate according to claim 1 or claim 2, **characterised in that** the pH thereof is between 8 and 12, especially between 8 and 10.

4. An ink concentrate according to any one of claims 1 to 3, **characterised in that** the pH thereof is less than 14, especially less than 13.

5. An ink concentrate according to any one of claims 1 to 4, **characterised in that** it contains 5 to 15% by weight dye.

6. An ink concentrate according to at least any one of the preceding claims, **characterised in that** it contains the high-boiling solvent in a quantity of 15 to 40% by weight, especially 15 to 30% by weight and/or with a boiling point of 205 to 250°C.

7. An ink concentrate according to at least any one of the preceding claims, **characterised in that** it contains the low-boiling solvent in a quantity of 2 to 15% by weight, especially 3 to 10% by weight and with a boiling point of 145°C to 198°C.

8. An ink concentrate according to at least any one of the preceding claims, **characterised in that** to adjust the desired pH range, it contains a pH adjusting agent in a quantity of 1 to 3% by weight.

9. An ink concentrate according to at least any one of the preceding claims, **characterised in that** it contains 1 to 2% by weight surfactant.

10. An ink concentrate according to at least any one of the preceding claims, **characterised in that** it contains 0.10 to 0.20% by weight complexing agent.

11. An ink concentrate according to at least any one of the preceding claims, **characterised in that** it contains 0.15 to 0.30% by weight biocide.

12. An ink concentrate according to at least any one of the preceding claims, **characterised in that** it contains 25 to 65% by weight, especially 30 to 55% by weight water, preferably in demineralised form.

13. An ink concentrate according to at least any one of the preceding claims, **characterised in that** its Brookfield viscosity is 2 to 30 mPa s, especially 3 to 25 mPa s (measured at 25°C).

14. An ink concentrate according to claim 13, **characterised in that** its Brookfield viscosity is 5 to 15 mPa s.

15. An ink concentrate according to at least any one of the preceding claims, **characterised in that** its surface tension, measured by the ring method (at 25°C), is 25 to 50 mN/m, especially 30 to 45 mN/m.

16. An ink concentrate according to claim 15, **characterised in that** its surface tension is 33 to 40 mN/m.

## Revendications

1. Concentré d'encre pour la fabrication d'encres pour l'impression par jet d'encre, ce concentré présentant un pH de plus de 8, en particulier de plus de 8,5 et contenant
a) 5 à 30 % en poids de colorants,
b) 15 à 50 % en poids de solvant à haut point d'ébullition d'un point d'ébullition supérieur à 200°C jusqu'à 260°C,
c) 0,5 à 20 % en poids de solvant à bas point d'ébullition d'un point d'ébullition allant de 130°C jusqu'à moins de 200°C,
d) 3 à 35 % en poids, en particulier plus de 8 et jusqu'à 35 % en poids de produit d'humidification,
e) plus de 0,1 % en poids, en particulier 0,1 à 7 % en poids d'agent tensioactif,
f) éventuellement plus de 0,01, en particulier 0,01 jusqu'à 5 % en poids d'agent de réglage de pH pour le réglage d'un pH de plus de 8,
g) éventuellement plus de 0,05 % en poids, en particulier 0,05 à 0,7 % en poids d'agent complexant,
h) éventuellement plus de 0,01 % en poids, en particulier 0,01 à 0,7 % en poids, de biocide et
i) le reste étant de l'eau.

2. Concentré d'encre selon la revendication 1, **caractérisé en ce qu'**il contient 5 à 20 % en poids d'agent d'humidification.

3. Concentré d'encre selon la revendication 1 ou 2, **caractérisé en ce que** son pH se situe entre 8 et 12, en particulier entre 8 et 10.

4. Concentré d'encre selon l'une des revendications 1 à 3, **caractérisé en ce que** son pH est inférieur à 14, en particulier inférieur à 13.

5. Concentré d'encre selon l'une des revendications 1 à 4, **caractérisé en ce qu'**il contient 5 à 15 % en poids de colorant.

6. Concentré d'encre selon au moins l'une des revendications précédentes, **caractérisé en ce qu'**il contient le solvant à haut point d'ébullition dans une quantité de 15 à 40 % en poids, en particulier 15 à 30 % en poids et/ou ayant un point d'ébullition de 205 à 250°C.

7. Concentré d'encre selon au moins l'une des revendications précédentes, **caractérisé en ce qu'**il contient le solvant à bas point d'ébullition dans une quantité de 2 à 15 % en poids, en particulier de 3 à 10 % en poids et/ou ayant un point d'ébullition de 145°C à 198°C.

8. Concentré d'encre selon au moins l'une des revendications précédentes, **caractérisé en ce que**, pour le réglage de la plage de pH souhaitée, il contient un agent de réglage de pH dans une quantité de 1 à 3 % en poids.

9. Concentré d'encre selon au moins l'une des revendications précédentes, **caractérisé en ce qu'**il contient 1 à 2 % en poids d'agent tensioactif.

10. Concentré d'encre selon au moins l'une des revendications précédentes, **caractérisé en ce qu'**il contient 0,10 à 0,20 % en poids d'agent complexant.

11. Concentré d'encre selon au moins l'une des revendications précédentes, **caractérisé en ce qu'**il contient 0,15 à 0,30 % en poids de biocide.

12. Concentré d'encre selon au moins l'une des revendications précédentes, **caractérisé en ce qu'**il contient 25 à 65 % en poids, en particulier 30 à 55 % en poids d'eau, de préférence dans une forme déminéralisée.

13. Concentré d'encre selon au moins l'une des revendications précédentes, **caractérisé en ce que** sa viscosité de Brookfield va de 2 à 30 mPa.s, en particulier de 3 à 25 mPa.s (mesurée à 25°C).

14. Concentré d'encre selon la revendication 13, **caractérisé en ce que** sa viscosité de Brookfield va de 5 à 15 mPa.s.

15. Concentré d'encre selon au moins l'une des revendications précédentes, **caractérisé en ce que** sa tension de surface, mesurée selon la méthode de Ring (à 25°C), va de 25 à 50 mN/m, en particulier de 30 à 45 mN/m.

16. Concentration d'encre selon la revendication 15, **caractérisée en ce que** sa tension de surface va de 33 à 40 mN/m.
